# EUROPÄISCHE PATENTSCHRIFT

(11) **EP 2 371 591 B1**
(45) Veröffentlichungstag und Bekanntmachung des Hinweises auf die Patenterteilung: **14.01.2015**
(21) Anmeldenummer: 11002062.5
(22) Anmeldetag: 11.03.2011
(51) Int. Cl.: B60H 1/24

(54) **Entlüftungsvorrichtung**
Ventilation device
Dispositif d'aération

(30) Priorität: 19.03.2010 DE 102010012087
(43) Veröffentlichungstag der Anmeldung: 05.10.2011
(73) Patentinhaber: TRW Automotive Electronics & Components GmbH, 78315 Radolfzell (DE)
(72) Erfinder: Weber, Andreas, 66497 Contwig (DE)
(74) Vertreter: Prinz & Partner mbB

(56) Entgegenhaltungen:
- EP-A1- 0 728 606
- EP-A2- 0 874 182

## Beschreibung

Die Erfindung betrifft eine Entlüftungsvorrichtung, insbesondere für einen Fahrzeuginnenraum, mit einem Rahmen, der zumindest eine Öffnung aufweist, und mit zumindest einer Rückschlagklappe, wobei an der Rückschlagklappe zumindest eine Aussparung vorgesehen ist, durch die sich ein am Rahmen vorgesehenes Halteelement erstreckt, und wobei die Rückschlagklappe abhängig von der wirkenden Druckdifferenz zwischen einer Schließposition, in der die Rückschlagklappe am Rahmen anliegt und die zumindest eine Öffnung des Rahmens verschließt, und einer geöffneten Stellung verstellbar ist, wobei das Halteelement zwischen einer Montagestellung, in der die Rückschlagklappe am Halteelement montiert werden kann, und einer verriegelten Stellung verformbar ist, in der die Rückschlagklappe nicht demontiert werden kann.

Entlüftungsvorrichtungen dienen dazu, die über ein Lüftungssystem dem Fahrzeuginnenraum zugeführte Luft abzuführen. Die Entlüftungsvorrichtung weist einen Rahmen auf, in dem eine Rückschlagklappe gelagert ist, die sich bei einem Überdruck im Fahrzeuginnenraum öffnen kann, so dass Luft aus dem Fahrzeuginnenraum entweichen kann. Wenn keine Luft aus dem Fahrzeuginnenraum ausströmt, liegt die Rückschlagklappe am Rahmen an, wodurch der Rahmen abgedichtet ist und ein Eindringen von Feuchtigkeit, Schmutz oder Abgasen in den Fahrzeuginnenraum verhindert ist.

Eine Entlüftungsvorrichtung der eingangs genannten Art ist aus der DE 20 2006 020 365 bekannt. Als Halteelemente werden Stifte verwendet, die jeweils einen Kopf aufweisen. Die Rückschlagklappe wird auf den Halteelementen montiert, indem der Kopf des entsprechenden Halteelements nach Art eines Knopfes durch die Aussparung ("Knopfloch") der Rückschlagklappe hindurchgedrückt wird. Es hat sich jedoch herausgestellt, dass sich die Rückschlagklappe im Betrieb von den Halteelementen lösen kann, so dass eine ordnungsgemäße Funktion nicht mehr gewährleistet ist.

Eine solche Entlüftungsvorrichtung gemäß Oberbegriff der Ansprüche 1 und 3 ist aus der EP 0 728 606 A1 bekannt, wobei der Kopf des Halteelements erst nach dem Aufsetzen der Rückschlagklappe ausgeformt wird. Dadurch kann der Kopf zwar größer ausgebildet werden, so dass ein Lösen der Rückschlagklappe verhindert wird. Ein reversibles Öffnen und Schließen, beispielsweise um die Rückschlagklappe zu tauschen, ist aber nicht möglich.

Aufgabe der Erfindung ist es, eine Entlüftungsvorrichtung bereitzustellen, bei der die Rückschlagklappe auf einfache Art montiert werden kann und besonders sicher befestigt ist.

Zur Lösung der Aufgabe ist bei einer Entlüftungsvorrichtung der eingangs genannten Art vorgesehen, dass das freie Ende des Halteelements in der verriegelten Stellung an einer Öffnung am Rahmen eingehakt ist. Die Erfindung beruht auf dem Grundgedanken, nicht mehr die Rückschlagklappe bei der Montage zu verformen, sondern ein Teil des Rahmens, so dass eine formschlüssige Verriegelung der Rückschlagklappe erhalten wird. In der Montagestellung des Halteelements ist ein einfaches Aufschieben der Rückschlagklappe auf das Halteelement möglich, sodass hier keine Kraft zur Befestigung bzw. zur Montage der Rückschlagklappe erforderlich ist. In einem zweiten Herstellungsschritt wird das Halteelement in die verriegelte Stellung verformt, in der die Rückschlagklappe nicht mehr demontiert werden kann. Das Halteelement kann beispielsweise so verformt werden, dass dieses mit dem Rahmen eine geschlossene Öse bildet, in der die Rückschlagklappe mittels ihrer Aussparung gelagert ist. Durch diese geschlossene Öse ist ein Abrutschen oder Herausrutschen der Rückschlagklappe vom Halteelement sicher ausgeschlossen. Das Halteelement wird nach der Montage der Rückschlagklappe so weit umgebogen, dass es in der Öffnung des Rahmens einhakt, wodurch eine geschlossene Öse gebildet ist, in der die Rückschlagklappe mit der Aussparung unverlierbar gelagert ist. Durch die Öffnung stehen keine Bauteile vor, an der die Rückschlagklappe bei der Montage verhaken kann.

Gemäß einer bevorzugten Ausführungsform ist vorgesehen, dass das freie Ende des Halteelements einen elastisch verformbaren Widerhaken aufweist.

Zur Lösung der Aufgabe ist alternativ bei einer Entlüftungsvorrichtung der eingangs genannten Art vorgesehen, dass das freie Ende des Halteelements in der verriegelten Stellung hinter einem Rastvorsprung am Rahmen eingehakt ist

Die Rückschlagklappe kann in derverriegelten Stellung des Halteelements in Richtung zum freien Ende des Halteelements begrenzt beweglich an diesem gelagert sein. Die Entlüftungsvorrichtung wird hier nicht nur durch ein Verformen der Rückschlagklappe geöffnet, sondern auch durch ein Verschieben bzw. ein Verschwenken der Rückschlagklappe relativ zum Halteelement bzw. Rahmen. Auf diese Weise kann ein besonders großer Öffnungsquerschnitt erhalten werden.

Um ein einfaches Verschieben entlang des Halteelements zu gewährleisten, ist die Aussparung der Rückschlagklappe vorzugsweise größer als der Querschnitt des Halteelements, so dass sich die Rückschlagklappe nicht auf dem Halteelement verklemmen oder verkanten kann.

Die Rückschlagklappe ist beispielsweise in der geöffneten Position auf dem Halteelement in Richtung zum freien Ende verschoben. Die Öffnung der Rückschlagklappe bzw. der Entlüftungsvorrichtung erfolgt also zumindest teilweise durch ein Verschwenken der Rückschlagklappe, so dass sich ein besonders großer Öffnungsquerschnitt ergibt.

Die Rückschlagklappe kann eine Zwischenposition aufweisen, in der die Klappe gegen das Halteelement verschwenkt ist, das heißt, die Rückschlagklappe ist in dieser Position nur verschwenkt und nicht verformt. Der Widerstand der Rückschlagklappe beim Verschieben bzw. Verschwenken entlang des Halteelements ist geringer als die Kraft, die notwendig ist, um die Rückschlagklappe zu verbiegen bzw. zu verformen. Zudem ist der Widerstand der Rückschlagklappe gegen das Öffnen beim Verschwenken konstant. Durch das Verschwenken der Rückschlagklappe bzw. das Verschieben der Rückschlagklappe auf dem Halteelement wird der Widerstand der Rückschlagklappe beim Öffnen der Entlüftungsvorrichtung verringert, so dass ein Luftaustausch bzw. Druckausgleich schon bei geringeren Druckdifferenzen möglich ist. Um die Rückschlagklappe von der Zwischenposition in die vollständig geöffnete Position zu bewegen, kann die Rückschlagklappe zusätzlich zur Verschwenkbewegung elastisch verformt werden.

Vorzugsweise steht das Halteelement in Richtung der Durchströmung der Entlüftungsvorrichtung vom Rahmen vor. Das Gelenk, das durch das Halteelement gebildet ist, steht somit in Richtung zur Schwenkbewegung der Rückschlagklappe vor, sodass ein einfaches Verschieben der Rückschlagklappe am Halteelement ermöglicht ist.

Um die Entlüftungsvorrichtung zu befestigen, sind vorzugsweise am Rahmen Befestigungsvorrichtungen vorgesehen, um den Rahmen an einem Fahrzeugteil zu befestigen. Die Befestigungsvorrichtungen sind beispielsweise Rastelemente, die an einem Fahrzeugteil einrasten können, oder andere geeignete Befestigungsvorrichtungen.

Um die Dichtigkeit der Entlüftungsvorrichtung sicherzustellen, sind zudem am Rahmen Dichtelemente vorgesehen, die den Rahmen zum Fahrzeugbauteil abdichten.

Die Rückschlagklappe ist vorzugsweise aus einem flexiblen Material hergestellt, sodass diese zusätzlich zum Verschwenken verformt werden kann. Dies verbessert die Abdichtung der Rückschlagklappe am Rahmen der Entlüftungsvorrichtung.

Weitere Vorteile und Merkmale ergeben sich aus der nachfolgenden Beschreibung in Verbindung mit den beigefügten Zeichnungen. In diesen zeigen:
- Figur 1 eine perspektivische Ansicht einer erfindungsgemäßen Entlüftungsvorrichtung,
- Figur 2 eine perspektivische Ansicht des Rahmens der Entlüftungsvorrichtung aus Figur 1,
- Figur 3 eine zweite perspektivische Ansicht des Rahmens aus Figur 2,
- Figur 4 die Rückschlagklappen der Entlüftungsvorrichtung aus Figur 1,
- Figur 5 eine Schnittansicht der Entlüftungsvorrichtung aus Figur 1 mit geschlossenen Rückschlagklappen,
- Figur 6 eine Schnittansicht der Entlüftungsvorrichtung mit geöffneten Rückschlagklappen,
- Figur 7 eine zweite Ausführungsform der erfindungsgemäßen Rückschlagklappe, und
- Figur 8 eine dritte Ausführungsform einer erfindungsgemäßen Entlüftungsvorrichtung.

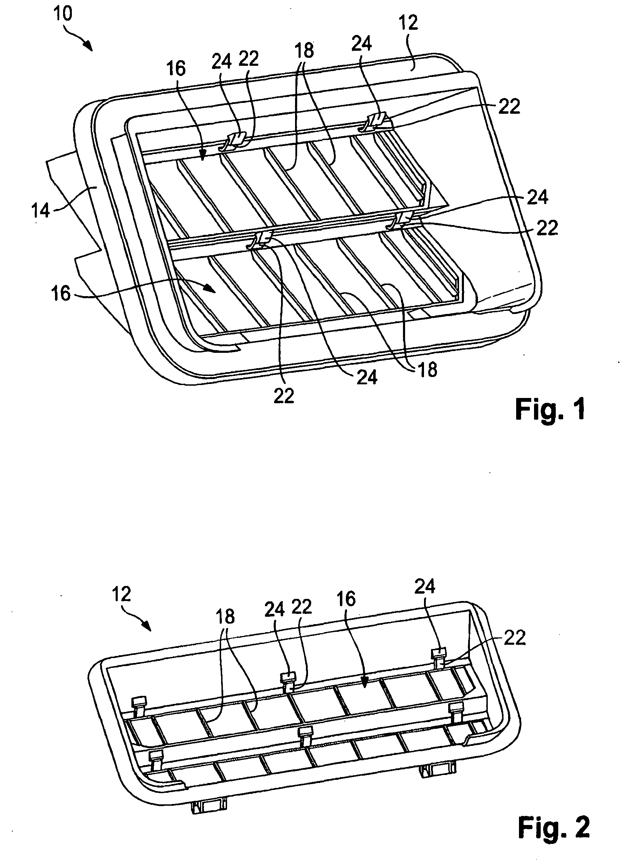

Die in Figur 1 dargestellte Entlüftungsvorrichtung 10 weist einen Rahmen 12 auf, der in einer Öffnung eines nicht dargestellten Fahrzeugteils befestigt werden kann. Am Rahmen 12 ist ein umlaufendes Dichtelement 14 vorgesehen, um die Entlüftungsvorrichtung 10 in der Öffnung des Fahrzeugbauteils abzudichten. Der Rahmen 12 weist zwei Öffnungen 16 auf, die zur Stabilisierung des Rahmens jeweils von mehreren Trennstegen 18 unterteilt sind. An jeder der Öffnungen 16 ist eine Rückschlagklappe 20 vorgesehen, die in der in Figur 1 dargestellten Schließposition jeweils die entsprechende Öffnung 16 vollständig verschließt. In der Schließposition liegt die Rückschlagklappe 20 am Rahmen 12 an und wird von den Trennstegen 18 gestützt. Die Rückschlagklappen 20 sind jeweils mit drei Halteelementen 22 (siehe auch Figur 2) beweglich am Rahmen 12 gelagert, sodass diese von der hier dargestellten Schließposition in eine geöffnete Position bewegt werden können, in der die Öffnungen 16 des Rahmens 12 freigegeben sind. Grundsätzlich kann auch eine andere Anzahl an Haltelementen verwendet werden.

Wie in Figur 2 zu sehen ist, stehen die Halteelemente 22 jeweils in Richtung zur Rückschlagklappe 20 vom Rahmen 12 vor. Die Halteelemente 22 sind hier aus einem flexiblen bzw. verformbaren Material hergestellt und können so umgebogen werden, dass diese mit einem freien Ende 28 hinter Rastvorsprüngen 24 einrasten können, die am Rahmen 12 vorgesehen sind.

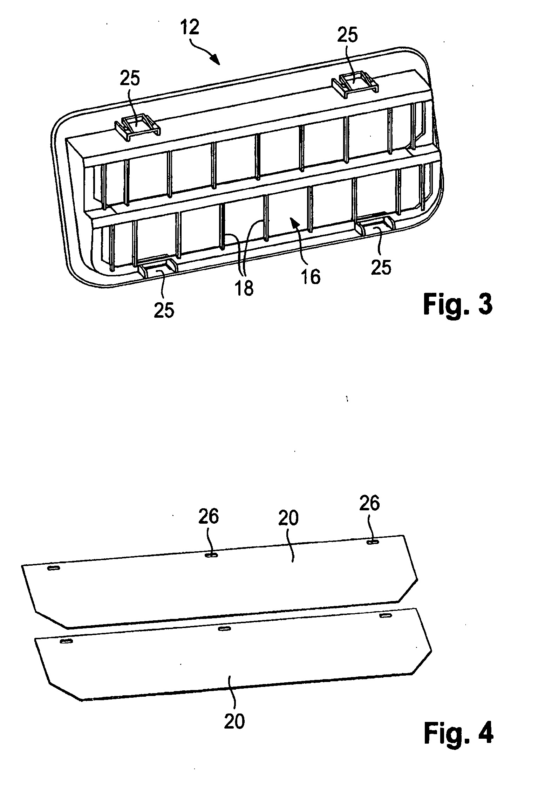

Wie insbesondere in Figur 3 zu sehen ist, sind auf der Rückseite des Rahmens 12 mehrere Befestigungsvorrichtungen 25 vorgesehen, um den Rahmen 12 und somit die Entlüftungsvorrichtung 10 an einem Fahrzeugbauteil zu befestigen. Die Befestigungsvorrichtungen 25 sind hier jeweils paarweise einander gegenüberliegende Rastvorrichtungen, die auf der Rückseite des Bauteils eingreifen bzw. verrasten können. Es ist aber auch denkbar, dass andere geeignete Befestigungsvorrichtungen 25 verwendet werden.

Die in Figur 4 dargestellten Rückschlagklappen 20 sind aus einem flexiblen Material hergestellt, sodass die Rückschlagklappen 20 zum Öffnen der Entlüftungsvorrichtung 10 verformt werden können. Jede der Rückschlagklappen 20 weist drei zu den Halteelementen 22 korrespondierende Aussparungen 26 auf.

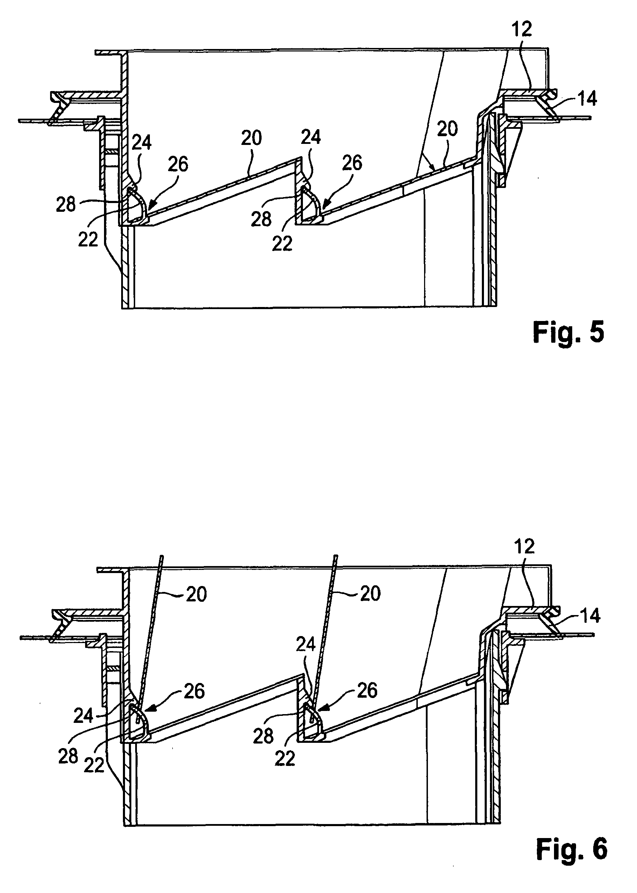

In der Ausgangs- oder Montagestellung stehen die Halteelemente 22 etwa gerade vom Rahmen ab. Die Rückschlagklappen 20 können daher leicht mit ihren Aussparungen 26 auf die Halteelemente 22 aufgeschoben werden(siehe auch Figur 5). Die Halteelemente 22 können dabei einen sich in Richtung zum Rahmen 12 aufweitenden Querschnitt aufweisen, sodass bei der Montage der Rückschlagklappe 20 am Rahmen 12 automatisch eine Zentrierung der Rückschlagklappe 20 zum Rahmen 12 erfolgt.

Nach dem Aufschieben der Rückschlagklappen 20 auf die Halteelemente 22 werden diese in Richtung der Rastvorsprünge 24 umgebogen bzw. verformt, bis sie mit dem freien Ende 28 hinter den Rastvorsprüngen 24 einhaken. Die Halteelemente 22 bilden in dieser verriegelten Stellung zusammen mit dem Rahmen 12 eine geschlossene Öse, in der die Rückschlagklappe 20 unverlierbar gelagert ist.

Die Aussparungen 26 der Rückschlagklappe 20 sind hier größer ausgebildet als der Querschnitt der Halteelemente 22, sodass die Rückschlagklappe 20 entlang des Halteelements 22 mit geringem Widerstand verschoben und auf diesem gekippt werden kann.

Wie insbesondere in Figur 6 zu sehen ist, in der die Entlüftungsvorrichtung 10 mit geöffneter Rückschlagklappe 20 darstellt ist, wird die Rückschlagklappe 20 beim Verstellen von der in Figur 5 dargestellten Schließposition in die offene Position nicht in sich verformt, sondern entlang des Halteelements 22 verschoben bzw. verschwenkt. Dadurch ist zum Öffnen der Rückschlagklappen eine sehr viel kleinere Kraft nötig als bei Rückschlagklappen, die sich beim Öffnen verformen müssen, sodass schon bei geringeren Druckunterschieden ein Öffnen der Rückschlagklappe 20 und somit der Entlüftungsvorrichtung 10 erfolgt.

Abweichend von der hier dargestellten Ausführungsform ist es aber auch denkbar, dass die Rückschlagklappe 20 entlang des Halteelements 22 nur in eine Zwischenposition verschoben bzw. verschwenkt wird und zum vollständigen Öffnen zusätzlich verformt wird.

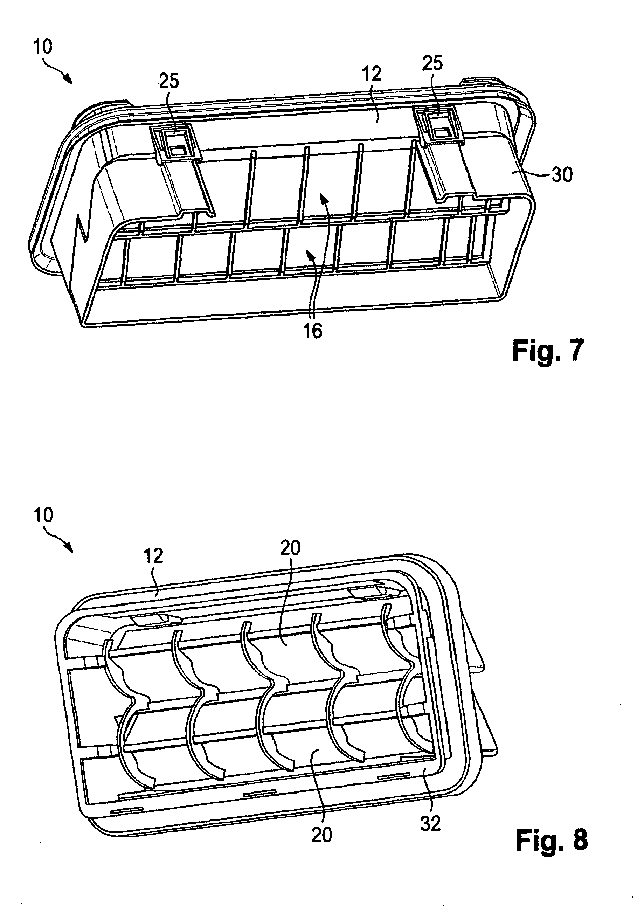

Die in Figur 7 dargestellte zweite Ausführungsform der Entlüftungsvorrichtung 10 entspricht im Wesentlichen der in den Figuren 1 bis 6 dargestellten Ausführungsform. Auf der Rückseite des Rahmens 12 ist hier lediglich zusätzlich eine Akustikhaube 30 vorgesehen, die einer verbesserten Schalldämmung der Entlüftungsvorrichtung 10 dient. Die Akustikhaube 30 ist hier als Verlängerung des Rahmens 12 ausgebildet, die beispielsweise mit hier nicht dargestellten Schaumelementen zur besseren Lärmdämmung ausgekleidet werden kann.

Die in Figur 8 dargestellte dritte Ausführungsform hat auf der Vorderseite des Rahmens 12 zusätzlich ein weiteres Rahmenelement 32, eine sogenannte Flatterkurve. In geöffneter Stellung der Rückschlagklappe 20 liegt diese an dem Rahmenelement 32 an, um ein Vibrieren der Rückschlagklappe 20 im Luftstrom zu verhindern, wodurch Geräusche durch die durchströmende Luft verringert werden.

## Patentansprüche

1. Entlüftungsvorrichtung (10), insbesondere für einen Fahrzeuginnenraum, mit einem Rahmen (12), der zumindest eine Öffnung (16) aufweist, und mit zumindest einer Rückschlagklappe (20), wobei an der Rückschlagklappe (20) zumindest eine Aussparung (26) vorgesehen ist, durch die sich ein am Rahmen (12) vorgesehenes Halteelement (22) erstreckt, und wobei die Rückschlagklappe (20) abhängig von der wirkenden Druckdifferenz zwischen einer Schließposition, in der die Rückschlagklappe (20) am Rahmen (12) anliegt und die zumindest eine Öffnung (16) des Rahmens (12) verschließt, und einer geöffneten Stellung verstellbar ist, **dadurch gekennzeichnet, dass** das Halteelement (22) zwischen einer Montagestellung, in der die Rückschlagklappe (20) am Halteelement (22) montiert werden kann, und einer verriegelten Stellung verformbar ist, in der die Rückschlagklappe (20) nicht demontiert werden kann, **dadurch gekennzeichnet, dass** das freie Ende (28) des Halteelements (22) in der verriegelten Stellung in einer Öffnung am Rahmen (12) eingehakt ist.

2. Entlüftungsvorrichtung nach einem der vorhergehenden Ansprüche, **dadurch gekennzeichnet, dass** das freie Ende (28) des Halteelements (22) einen elastisch verformbaren Widerhaken aufweist.

3. Entlüftungsvorrichtung (10), insbesondere für einen Fahrzeuginnenraum, mit einem Rahmen (12), der zumindest eine Öffnung (16) aufweist, und mit zumindest einer Rückschlagklappe (20), wobei an der Rückschlagklappe (20) zumindest eine Aussparung (26) vorgesehen ist, durch die sich ein am Rahmen (12) vorgesehenes Halteelement (22) erstreckt, und wobei die Rückschlagklappe (20) abhängig von der wirkenden Druckdifferenz zwischen einer Schließposition, in der die Rückschlagklappe (20) am Rahmen (12) anliegt und die zumindest eine Öffnung (16) des Rahmens (12) verschließt, und einer geöffneten Stellung verstellbar ist, **dadurch gekennzeichnet, dass** das Halteelement (22) zwischen einer Montagestellung, in der die Rückschlagklappe (20) am Halteelement (22) montiert werden kann, und einer verriegelten Stellung verformbar ist, in der die Rückschlagklappe (20) nicht demontiert werden kann, **dadurch gekennzeichnet, dass** das freie Ende (28) des Halteelements (22) in der verriegelten Stellung hinter einem Rastvorsprung (24) am Rahmen (12) eingehakt ist und dass das freie Ende (28) des Halteelements (22) einen elastisch verformbaren Widerhaken aufweist.

4. Entlüftungsvorrichtung nach einen der vorhergehenden Ansprüche, **dadurch gekennzeichnet, dass** die Rückschlagklappe (20) in der Schließposition des Halteelements (22) in Richtung zum freien Ende (28) begrenzt beweglich gelagert ist.

5. Entlüftungsvorrichtung nach einem der vorhergehenden Ansprüche, **dadurch gekennzeichnet, dass** die Aussparung (26) der Rückschlagklappe (20) größer ist als der Querschnitt des Halteelements (22).

6. Entlüftungsvorrichtung nach einem der vorhergehenden Ansprüche, **dadurch gekennzeichnet, dass** die Rückschlagklappe (20) in der geöffneten Stellung auf dem Halteelement (22) in Richtung zum freien Ende (28) verschoben ist.

7. Entlüftungsvorrichtung nach einem der vorhergehenden Ansprüche, **dadurch gekennzeichnet, dass** die Rückschlagklappe (20) eine Zwischenposition aufweist, in der die Rückschlagklappe (20) gegen das Halteelement (22) verschwenkt ist.

8. Entlüftungsvorrichtung nach einem der vorhergehenden Ansprüche, **dadurch gekennzeichnet, dass** das Halteelement (22) in Richtung der Durchströmung der Entlüftungsvorrichtung vom Rahmen (12) vorsteht.

9. Entlüftungsvorrichtung nach einem der vorhergehenden Ansprüche, **dadurch gekennzeichnet, dass** am Rahmen (12) Befestigungsvorrichtungen (25) vorgesehen sind, um den Rahmen (12) an einem Fahrzeugbauteil zu befestigen.

10. Entlüftungsvorrichtung nach einem der vorhergehenden Ansprüche, **dadurch gekennzeichnet, dass** am Rahmen (12) Dichtelemente (14) vorgesehen sind.

11. Entlüftungsvorrichtung nach einem der vorhergehenden Ansprüche, **dadurch gekennzeichnet, dass** die Rückschlagklappe (20) aus einem flexiblen Material hergestellt ist.

## Claims

1. A ventilation device (10), in particular for a vehicle interior, comprising a frame (12) which has at least one opening (16), and at least one non-return flap (20), the non-return flap (20) having at least one recess (26) provided thereon through which a holding member (22) provided on the frame (12) extends, and the non-return flap (20), depending on the active pressure differential, being adjustable between a closed position, in which the non-return flap (20) rests against the frame (12) and closes the at least one opening (16) of the frame (12), and an open position, **characterized in that** the holding member (22) is deformable between a mounting position, in which the non-return flap (20) can be mounted to the holding member (22), and a locked position, in which the non-return flap (20) can not be dismounted, **characterized in that** the free end (28) of the holding member (22) in the locked position is hooked in an opening on the frame (12).

2. The ventilation device according to any of the preceding claims, **characterized in that** the free end (28) of the holding member (22) includes an elastically deformable barb.

3. A ventilation device (10), in particular for a vehicle interior, comprising a frame (12) which has at least one opening (16), and at least one non-return flap (20), the non-return flap (20) having at least one recess (26) provided thereon through which a holding member (22) provided on the frame (12) extends, and the non-return flap (20), depending on the active pressure differential, being adjustable between a closed position, in which the non-return flap (20) rests against the frame (12) and closes the at least one opening (16) of the frame (12), and an open position, **characterized in that** the holding member (22) is deformable between a mounting position, in which the non-return flap (20) can be mounted to the holding member (22), and a locked position, in which the non-return flap (20) can not be dismounted, **characterized in that** the free end (28) of the holding member (22) in the locked position is hooked behind a latching projection (24) on the frame (12) and **in that** the free end (28) of the holding member (22) includes an elastically deformable barb.

4. The ventilation device according to any of the preceding claims, **characterized in that** in the closed position of the holding member (22), the non-return flap (20) is mounted for limited movement towards the free end (28).

5. The ventilation device according to any of the preceding claims, **characterized in that** the recess (26) of the non-return flap (20) is larger than the cross-section of the holding member (22).

6. The ventilation device according to any of the preceding claims, **characterized in that** in the open position, the non-return flap (20) is shifted on the holding member (22) towards the free end (28).

7. The ventilation device according to any of the preceding claims, **characterized in that** the non-return flap (20) has an intermediate position, in which the non-return flap (20) is swiveled against the holding member (22).

8. The ventilation device according to any of the preceding claims, **characterized in that** the holding member (22) protrudes from the frame (12) in the direction of flow through the ventilation device.

9. The ventilation device according to any of the preceding claims, **characterized in that** the frame (12) has fastening devices (25) provided thereon for fastening the frame (12) to a vehicle component.

10. The ventilation device according to any of the preceding claims, **characterized in that** the frame (12) has sealing elements (14) provided thereon.

11. The ventilation device according to any of the preceding claims, **characterized in that** the non-return flap (20) is made from a flexible material.

## Revendications

1. Dispositif d'aération (10), en particulier pour l'habitacle d'un véhicule, comportant un cadre (12) qui présente au moins un orifice (16), et comportant au moins un clapet antiretour (20), au moins un évidement (26) étant prévu sur le clapet antiretour (20), à travers duquel s'étend un élément de retenue (22) prévu sur le cadre (12), et le clapet antiretour (20) étant déplaçable entre une position de fermeture dans laquelle le clapet antiretour (20) repose sur le cadre (12) et ferme ledit au moins un orifice (16) du cadre (12), et une position ouverte en fonction de la différence de pression agissant, **caractérisé en ce que** l'élément de retenue (22) est apte à être déformé entre une position de montage dans laquelle le clapet antiretour (20) peut être monté sur l'élément de retenue (22), et une position verrouillée dans laquelle le clapet antiretour (20) ne peut pas être démonté, **caractérisé en ce que** dans la position verrouillée, l'extrémité libre (28) de l'élément de retenue (22) est enclenchée dans un orifice sur le cadre (12).

2. Dispositif d'aération selon l'une des revendications précédentes, **caractérisé en ce que** l'extrémité libre (28) de l'élément de retenue (22) présente une barbe élastiquement déformable.

3. Dispositif d'aération (10), en particulier pour l'habitacle d'un véhicule, comportant un cadre (12) qui présente au moins un orifice (16), et comportant au moins un clapet antiretour (20), au moins un évidement (26) étant prévu sur le clapet antiretour (20), à travers duquel s'étend un élément de retenue (22) prévu sur le cadre (12), et le clapet antiretour (20) étant déplaçable entre une position de fermeture dans laquelle le clapet antiretour (20) repose sur le cadre (12) et ferme ledit au moins un orifice (16) du cadre (12), et une position ouverte en fonction de la différence de pression agissant, **caractérisé en ce que** l'élément de retenue (22) est apte à être déformé entre une position de montage dans laquelle le clapet antiretour (20) peut être monté sur l'élément de retenue (22), et une position verrouillée dans laquelle le clapet antiretour (20) ne peut pas être démonté, **caractérisé en ce que** dans la position verrouillée, l'extrémité libre (28) de l'élément de retenue (22) est enclenchée derrière une saillie d'enclenchement (24) sur le cadre (12) et **en ce que** l'extrémité libre (28) de l'élément de retenue (22) présente une barbe élastiquement déformable.

4. Dispositif d'aération selon l'une des revendications précédentes, **caractérisé en ce que** dans la position de fermeture de l'élément de retenue (22), le clapet antiretour (20) est monté de sorte à être mobile de façon limitée en direction de l'extrémité libre (28).

5. Dispositif d'aération selon l'une des revendications précédentes, **caractérisé en ce que** l'évidement (26) du clapet antiretour (20) est plus grand que la section transversale de l'élément de retenue (22).

6. Dispositif d'aération selon l'une des revendications précédentes, **caractérisé en ce que** dans la position ouverte, le clapet antiretour (20) est déplacé sur l'élément de retenue (22) en direction de l'extrémité libre (28).

7. Dispositif d'aération selon l'une des revendications précédentes, **caractérisé en ce que** le clapet antiretour (20) comprend une position intermédiaire dans laquelle le clapet antiretour (20) est pivoté contre l'élément de retenue (22).

8. Dispositif d'aération selon l'une des revendications précédentes, **caractérisé en ce que** l'élément de retenue (22) fait saillie du cadre (12) en direction de l'écoulement à travers le dispositif d'aération.

9. Dispositif d'aération selon l'une des revendications précédentes, **caractérisé en ce que** des dispositifs de fixation (25) sont prévus sur le cadre (12) pour fixer le cadre (12) sur un composant de véhicule.

10. Dispositif d'aération selon l'une des revendications précédentes, **caractérisé en ce que** des éléments d'étanchéité (14) sont prévus sur le cadre (12).

11. Dispositif d'aération selon l'une des revendications précédentes, **caractérisé en ce que** le clapet antiretour (20) est réalisé en une matière flexible.
